**Europäisches Patentamt**

(19) **European Patent Office**

**Office européen des brevets**

(11) Numéro de publication: **0 092 891**
**B1**

(12) ## FASCICULE DE BREVET EUROPEEN

(45) Date de publication du fascicule du brevet:
29.01.86

(51) Int. Cl.⁴: **A 01 K 1/062**

(21) Numéro de dépôt: 83200593.8

(22) Date de dépôt: 26.04.83

(54) **Dispositif pour attacher un animal.**

(30) Priorité: 28.04.82 BE 2059682
09.07.82 BE 2059771

(43) Date de publication de la demande:
02.11.83 Bulletin 83/44

(45) Mention de la délivrance du brevet:
29.01.86 Bulletin 86/5

(84) Etats contractants désignés:
AT BE CH DE FR IT LI LU NL SE

(56) Documents cités:
BE - A - 764 023
BE - A - 885 292
DE - A - 2 545 052
FR - A - 2 435 901

(73) Titulaire: **Vandekeybus, Christiaan Adriaan Corneel,
Kloosterstraat 21, B-2190 Essen (BE)**

(72) Inventeur: **Vandekeybus, Christiaan Adriaan Corneel,
Kloosterstraat 21, B-2190 Essen (BE)**

(74) Mandataire: **De Rycker, Rudolf, Ir. et al, Vereenigde
Octrooibureaux Belgie S.A. Charlottalei 48,
B-2018 Antwerpen (BE)**

ACTORUM AG

## Description

L'invention est relative à un dispositif à fermeture et verrouillage automatiques pour attacher un animal, ce dispositif comprenant:

— un élément de suspension à suspendre à la partie supérieure à une structure fixe,

— un étrier inférieur qui est relié à la structure fixe,

— deux branches latérales espacées qui se situent entre l'élément de suspension et l'étrier inférieur et qui forment conjointement avec ce dernier, un seul carcan, lesdistes branches étant chacune constituées par:

— une partie supérieure qui s'articule sur l'élément de suspension autour d'un axe perpendiculaire au plan principal du carcan et s'étend au-dessus et en dessous de cet axe, et

— une partie basse qui est reliée par l'intermédiaire d'une première articulation, à la partie supérieure, et par l'intermédiaire d'une autre articulation à l'étrier inférieur, lesdites articulations permettant ensemble un mouvement dans le plan principal du carcan et hors de celui-ci,

— des moyens élastiques à dépassement de point mort qui, dans une position extrême, maintiennent rapprochées les parties inférieures des parties supérieures en une position de fermeture et, dans l'autre position extrême d'ouverture les maintiennent écartées avec leurs extrémités supérieures des parties supérieures rapprochées l'une de l'autre, et

— un verrou qui, au sommet, verrouille les branches l'une par rapport à l'autre, en position de fermeture.

Des dispositifs de ce genre sont en particulier destinés à attacher des vaches.

Un dispositif de ce genre est connu d'après le brevet BE-A N° 885292.

Dans ce dispositif connu, de même que dans le dispositif suivant l'invention, les deux parties basses et les deux parties supérieures du carcan forment, dans la position d'ouverture de ce dernier, un parallélogramme avec une diagonale horizontale dans le sens transversal de la station couché-et-debout où est suspendu le carcan.

Le passage de la position d'ouverture à celle de fermeture est réalisé grâce au fait que cette diagonale horizontale est raccourcie et par conséquent la diagonale verticale du parallélogramme est allongée, ce qui amène aussi les moyens précités de la position extrême où ils maintiennent les parties supérieures des branches de carcan en position d'ouverture, à celle où ils maintiennent ces parties supérieures en position de fermeture.

En position d'ouverture, dans laquelle la diagonale verticale est au plus court, les éléments souples, en général des chaînes, avec lesquels l'élément de suspension est suspendu à la structure fixe et l'étrier inférieur est relié à la structure fixe, c'est-à-dire en fait au plancher, peuvent être tendus.

C'est le cas pour le dispositif connu suivant le brevet BE-A N° 885292, dans lequel le passage de la position d'ouverture à celle de fermeture est réalisé exclusivement parce que l'animal pénétrant dans la station debout-et-couché et voulant manger dans la mangeoire qui se trouve de l'autre côté du dispositif par rapport à celui de pénétration, pouse sur l'étrier inférieur ou sur les parties basses des branches de carcan, vers la mangeoire.

Le carcan est donc repoussé vers la mangeoire, mais étant donné que les éléments souples qui relient l'étrier inférieur et l'élément de suspension à la structure fixe, sont tendus en position d'ouverture du carcan, ceci n'est possible que si la diagonale verticale du parallélogramme s'allonge. Avec un allongement suffisant de la diagonale verticale, le passage précité a lieu. L'allongement de la diagonale verticale est fonction de la distance sur laquelle l'animal fait avancer le carcan, mais aussi de la longueur des éléments souples. Plus longs sont ces derniers et plus loin doit être repoussé vers l'avant le carcan, pour provoquer le passage d'une position à l'autre, c'est-à-dire pour amener les moyens qui, dans une position extrême maintiennent les parties supérieures en position d'ouverture, et dans l'autre position extrême les maintiennent en position de fermeture, au-delà de la position d'équilibre dans laquelle ils n'exercent de traction ni dans un sens, ni dans l'autre.

Or, pour une station couché-et-debout donnée, la distance entre la structure fixe au sommet, par exemple une poutre supérieure, à laquelle l'élément souple qui porte l'élément de suspension peut être suspendu, et le plancher de la structure fixe auquel est relié l'étrier inférieur, est fixe, de telle sorte que pour un dispositif donné et une station couché-et-debout donnée, la longueur des éléments souples ne peut être choisie librement.

Pour une grande hauteur de la poutre supérieure au-dessus du plancher, les éléments souples doivent aussi être longs, de telle sorte que le carcan doit être repoussé fort loin et éventuellement au-dessus de la mangeoire pour passer de la position d'ouverture à celle de fermeture. Le fait que l'animal repousse le carcan suffisamment loin pour le fermer dépend de l'endroit où il trouve des aliments qui sont situés de l'autre côté du carcan par rapport au côté d'arrivée. Or, on ne peut placer les aliments suffisamment loin du carcan dans chaque station couché-et-debout afin que l'animal communique au carcan un déplacement suffisant pour en provoquer la fermeture, de telle sorte que le dispositif connu suivant le brevet BE-A N° 885292 ne peut être appliqué partout.

En outre, dans ce dispositif connu, les moyens qui maintiennent dans une position extrême les parties supérieures en position de fermeture et dans leur autre position extrême les maintiennent en position d'ouverture doivent être agencés avec une grande précision, ce qui n'est pas toujours possible en pratique, de telle sorte que la fiabilité d'exploitation de ce dispositif laisse quelquefois à désirer.

Un inconvénient du dispositif suivant le brevet BE-A N° 885292 est encore qu'il ne se ferme pas toujours lors de l'arrivée d'animaux de petite taille.

L'invention a pour but d'éliminer ces inconvénients.

A cette fin, la partie basse d'au moins une branche comporte un prolongement inférieur s'étendant au-delà de ladite autre articulation qui forme la liaison avec l'étrier inférieur, ledit prolongement étant situé du côté intérieur au carcan par rapport à ladite autre articulation de manière à s'étendre en direction de l'autre branche en position d'ouverture du carcan.

Un dispositif pour attacher un animal dont une partie basse de chaque branche de carcan comporte un prolongement inférieur s'étendant au-delà d'une articulation qui forme la liaison avec le carcan inférieur, ce prolongement étant situé du côté intérieur au carcan par rapport à ladite articulation de manière à s'étendre en direction de l'autre branche en position d'ouverture du carcan, est connu d'après le brevet DE-A N° 2545052.

Dans ce dispositif connu, les branches s'articulent uniquement par rapport à l'étrier inférieur qui forme un tout avec une porte supérieure qui offre sa plus grande dimension dans le sens transversal de la station couché-et-debout, au sommet. Au-dessus de l'étrier inférieur, les deux branches de carcan de ce dispositif connu sont en une pièce, de telle sorte que la forme en parallélogramme de ces branches en position d'ouverture du carcan fait complètement défaut.

Par rapport au dernier dispositif connu précité, le dispositif suivant l'invention offre l'avantage que l'ouverture du carcan ouvert a sa plus grande largeur à une hauteur inférieure, à savoir au niveau de la diagonale horizontale. Dans le dispositif connu suivant la demande allemande, cette ouverture est au plus large tout à fait au sommet. L'animal entrant, qui tient normalement la tête baissée lorsqu'il pénètre dans la station couché-et-debout, ne doit pas relever la tête aussi haut, d'autant plus que dans le dispositif suivant l'invention, l'étrier inférieur est moins haut. De ce fait, l'animal apprend plus facilement à fermer le dispositif suivant l'invention.

Au niveau où l'animal présente la tête lors de la pénétration dans la station couché-et-debout, le carcan ouvert suivant l'invention est plus large que le carcan suivant la demande allemande, de telle sorte que l'animal ne passe pas aussi facilement la tête à côté du carcan du dispositif suivant l'invention.

Le dispositif suivant DE-A N° 2545052 a au sommet, dans la direction transversale de la station couché-et-debout, une plus grande largeur que ce qui est requis pour la tête de l'animal, car les branches de carcan doivent être guidées au-dessus et cette largeur est conservée que le carcan soit fermé ou ouvert. De ce fait, la mise en place de ce dispositif connu exige une plus grande largeur. Il en résulte qu'il est difficile et dangereux pour une personne de passer à côté du carcan pour aller du côté de la tête de l'animal vers le côté de la queue ou vice versa. Cet inconvénient aussi est éliminé suivant l'invention.

La plus grande largeur du dispositif connu d'après le brevet DE-A N° 2545052, même avec le carcan fermé, offre l'inconvénient qu'un ensemble large est balancé en va-et-vient par les mouvements de la bête attachée, et vient éventuellement en contact brutal alors avec des poteaux qui s'élèvent entre des stations debout-et-couché adjacentes.

Ce désavantage ne se rencontre pas dans le dispositif suivant l'invention.

Un dispositif avec un élément de suspension, des branches de carcan en deux parties articulées entre elles et un étrier inférieur, est connu d'après le brevet DE-A N° 2845521. Dans ce dispositif connu, les branches de carcan peuvent former un parallélogramme en position d'ouverture et ce dispositif comprend aussi un mécanisme distinct qui est actionné par l'animal pour amener le carcan de la position d'ouverture à celle de fermeture. Ce mécanisme est cependant plus complexe et moins fiable en exploitation pour la fermeture que les prolongements des parties basses situés du côté intérieur au carcan du dispositif suivant l'invention.

Dans une forme de réalisation particulière de l'invention, ladite autre articulation est composée et comprend

— un corps central d'articulation,
— une seconde articulation formant la liaison entre ce corps et l'étrier inférieur et ayant son axe dans le plan du carcan et
— une troisième articulation formant la liaison entre ce corps et la partie basse et ayant son axe perpendiculaire au plan du carcan.

D'autres particularités et avantages de l'invention ressortiront de la description ci-après de deux formes de réalisation d'un dispositif pour attacher un animal suivant l'invention; cette description est uniquement donnée comme exemple et ne limite pas l'invention; les chiffres de référence concernent les dessins annexés.

La fig. 1 est une vue frontale d'un premier dispositif pour attacher un animal suivant l'invention, le carcan étant représenté en position de fermeture.

La fig. 2 est une vue frontale du dispositif suivant la fig. 1, le carcan étant représenté en position d'ouverture.

La fig. 3 est une vue en élévation latérale d'une partie du dispositif suivant les fig. 1 et 2.

La fig. 4 est une vue en coupe verticale d'une partie du dispositif suivant les figures précédentes.

La fig. 5 est une vue de dessus d'une partie du dispositif suivant les figures précédentes.

La fig. 6 est une vue frontale de la partie inférieure d'une variante du dispositif pour attacher un animal suivant les figures précédentes, le carcan étant représenté en position de fermeture.

La fig. 7 est une vue frontale de la partie du dispositif illustrée à la fig. 6, le carcan étant représenté en position d'ouverture.

La fig. 8 est une vue en élévation latérale d'une partie du dispositif suivant les fig. 6 et 7, le carcan prenant la position fermée suivant la fig. 6.

La fig. 9 est une vue en coupe suivant la ligne IX-IX de la fig. 6.

La fig. 10 est une vue en coupe suivant la ligne X-X de la fig. 6.

Dans les diverses figures, des références identiques concernent des éléments semblables.

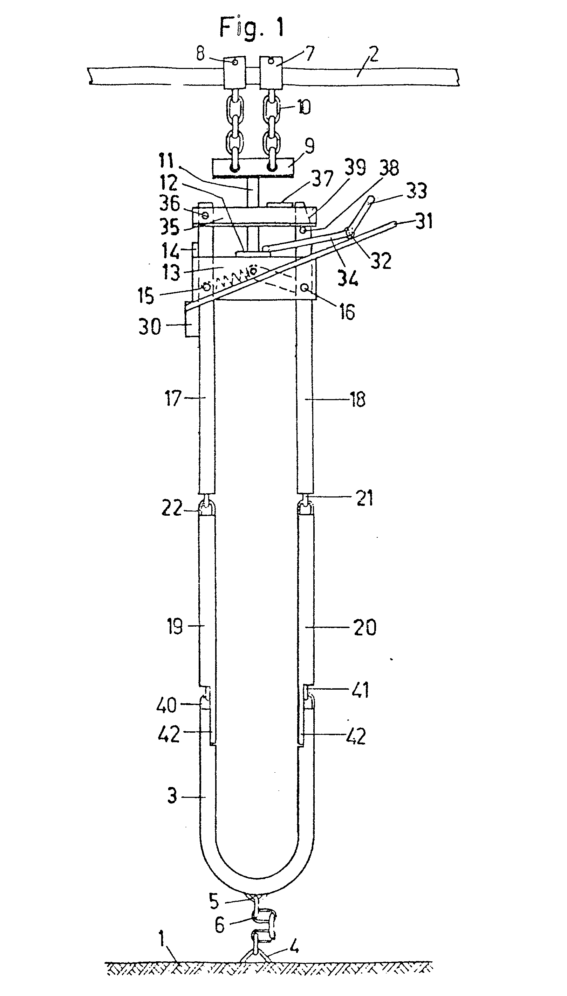

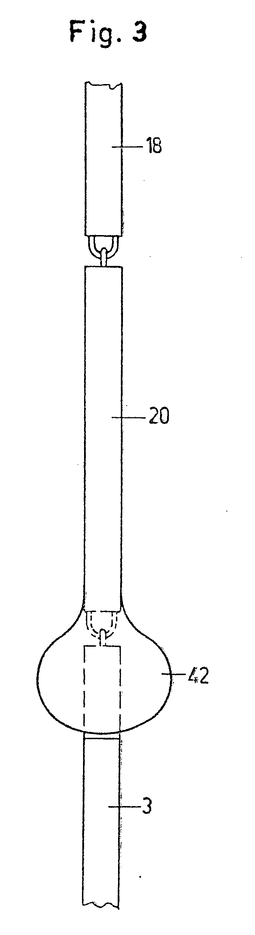

Le dispositif représenté aux fig. 1 à 5 pour attacher un animal, est monté dans une structure fixe dont font partie le plancher 1 et la poutre supérieure 2.

Ce dispositif est destiné à attacher une vache dans une station couché-et-debout. La direction transversale de cette dernière correspond à la direction de la poutre 2. La direction longitudinale lui est perpendiculaire. Il s'agit de la direction qui est prise par l'animal alors qu'il pénètre normalement dans la station couché-et-debout.

Le dispositif est constitué essentiellement par un élément de suspension 12-13-14 et un carcan qui est à son tour constitué par un étrier inférieur 3 et des branches latérales de carcan s'y raccordant. Chaque branche de carcan comprend une partie supérieure 17-18 et une partie basse 19-20. Ces parties 17-18-19-20 sont reliées de façon articulée entre elles ainsi qu'à l'élément de suspension 12-13-14 et à l'étrier inférieur 3, d'une façon décrite en détail ci-après. Au repos, ces parties se trouvent dans un même plan, dit plan principal du carcan. Que le dispositif se trouve à la position d'ouverture décrite ci-après, ou à celle de fermeture décrite ci-après, l'ensemble du dispositif a en tout cas, à l'équilibre, son plan de carcan principal suivant une direction qui correspond à la direction transversale de la station couché-et-debout.

Sur un côté, dit ci-après côté avant, du dispositif s'étendant au repos suivant la direction transversale de la station couché-et-debout, cette dernière possède une mangeoire. L'autre côté du dispositif sera donc dénommé le côté arrière.

L'élément de suspension dans lequel les parties supérieures 17 et 18 du carcan avec lequel l'animal est attaché, sont suspendues de façon articulée, est constitué par deux plaques 13 qui, dans l'état d'équilibre, s'étendent suivant la direction transversale de la station debout, par une plaque 12 qui relie au sommet les plaques 13, et par des pièces d'écartement ou séparateurs 14 qui relient de part et d'autre les extrémités des plaques 13 entre elles.

Pour la suspension de l'élément de suspension 12-13-14, deux petits étriers de fixation 7 sont placés autour de la poutre transversale 2 sur laquelle ils sont maintenus par des boulons 8 avec écrous.

Un fer en T 9 pend par l'intermédiaire de deux chaînes 10 aux petits étriers de fixation 7. Etant donné que les chaînes 10 sont des éléments de suspension souples, elles cherchent sous l'influence du poids du fer en T 9 et de tout ce qui en pend, la position dans laquelle leurs lignes d'axe sont parallèles entre elles. Au repos ces lignes d'axe définissent un plan vertical qui s'étend parallèlement à la poutre supérieure 2, donc suivant la direction transversale de la station couché-et-debout.

D'après la description qui suit, il sera clair que les parties supérieures 17 et 18 du carcan aussi s'étendent dans un plan vertical lorsque le fer en T 9 s'étend dans un tel plan.

Sous l'influence de l'animal, le carcan et donc ses parties 17 et 18 et le fer en T 9 peuvent être amenés hors du plan transversal, mais dès que la pesanteur peut agir librement, le carcan reviendra dans le plan transversal.

Le fer en T 9 forme un tout rigide avec la tige 11 et la plaque supérieure 12 de l'élément de suspension qui est soudée à cette tige.

Un œillet 5 qui se présente à la partie inférieure sur l'étrier inférieur 3, est relié par l'intermédiaire d'une chaîne 6, à un œillet 4 qui est encastré dans le plancher 1 de la structure fixe. Le dispositif est donc monté entre la poutre supérieure 2 et le plancher 1 par l'intermédiaire de chaînes 10 et 6. Lorsque le dispositif prend la position de fermeture illustrée à la fig. 1, la chaîne 6 prend du mou, ce qui rend possible dans certaines limites, le mouvement de l'animal. Quand on veut limiter cette possibilité de mouvement, on peut relier, à la partie supérieure, des maillons des chaînes 10 qui ne sont pas adjacents, directement entre eux, par exemple par un simple crochet, ce qui réduit le jeu dans la suspension.

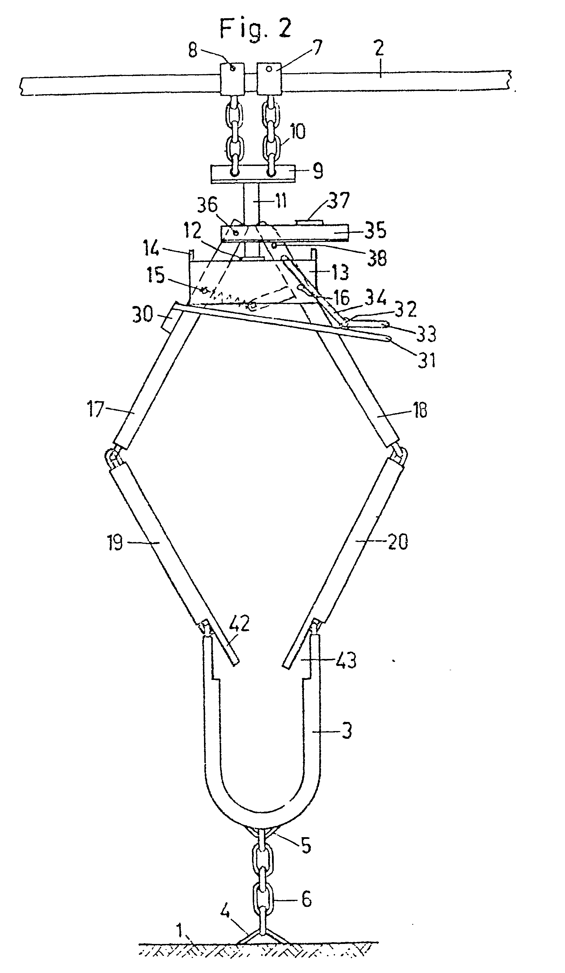

Lorsque le dispositif prend la position d'ouverture illustrée à la fig. 2, la chaîne 6 a moins de jeu, de telle sorte que la possibilité de mouvement du dispositif ouvert est plus limitée ou même négligeable, si la chaîne 6 est tendue.

Dans les plaques 13 sont montées des goupilles 15 et 16 autour desquelles s'articulent les parties supérieures 17 et 18 du carcan qui attache l'animal.

Les parties supérieures 17 et 18 s'articulent donc autour des goupilles 15 et 16 qui forment des axes qui sont perpendiculaires au plan principal du carcan. Par plan principal du carcan on entend le plan transversal de la station couché-et-debout dans lequel se trouvent entre autres les parties de carcan 17, 18, 19, 20 et l'étrier inférieur 3 lorsque le dispositif pend en équilibre en position de fermeture.

Les directions indiquées ci-après des divers œillets qui relient entre elles les parties du carcan se réfèrent à cet état d'équilibre du plan principal du carcan.

A leurs extrémités inférieures, les parties supérieures 17 et 18 des branches de carcan portent des œillets 21 qui sont parallèles au plan de symétrie longitudinal de la station couché-et-debout.

Dans les œillets 21 s'engagent des œillets 22 des extrémités supérieures des parties basses 19 et 20 du carcan. Les œillets 22 sont parallèles au plan transversal vertical de la station couché-et-debout.

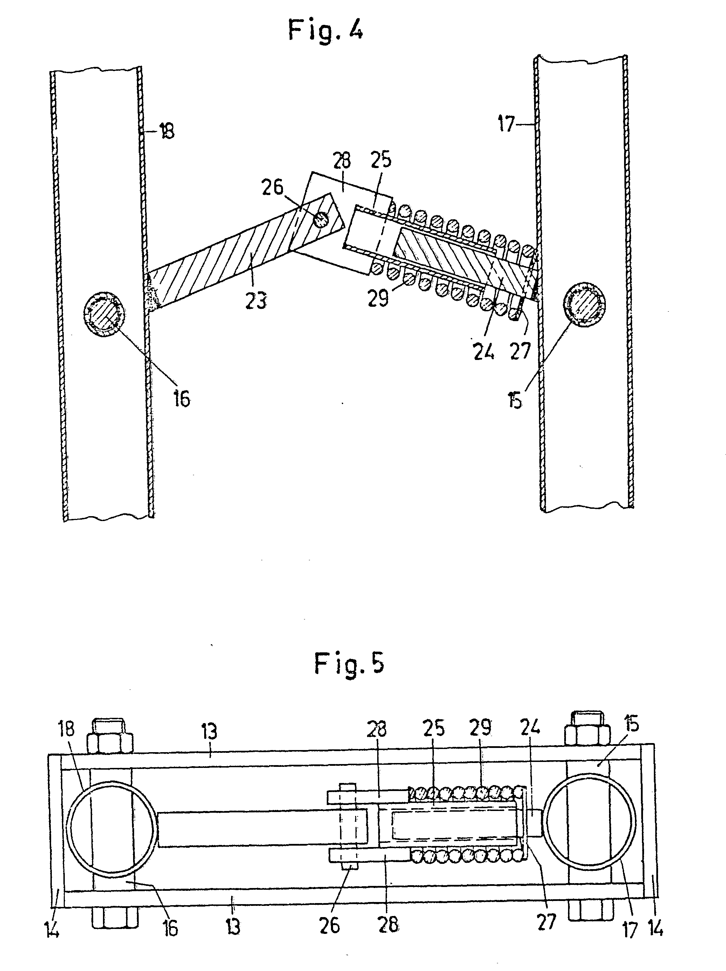

La partie supérieure 18 porte, approximativement à la hauteur de la goupille 16, une saillie 23. Cette dernière fait un angle fixe avec la partie 18 et est dirigée vers le haut quand la partie 18 se trouve à la position de fermeture des fig. 1 et 4, et est dirigée vers le bas quand la partie 18 se trouve à la position d'ouverture de la fig. 2.

La partie supérieure 17 de l'autre branche porte aussi une saillie. Cette dernière est en plusieurs parties et possède une longueur variable. Elle est constituée par une goupille simple fixe 24 et un petit tube 25 qui peut coulisser en va-et-vient sur cette goupille. Cette goupille 24 et par conséquent le petit tube 25 qui se situe dans son prolongement, font avec la partie 17 le même angle que celui formé entre la partie 18 et la saillie 23.

Le petit tube 25 porte à son extrémité deux lèvres 28 qui sont reliées de façon articulée par un petit arbre 26, à la saillie 23.

Un ressort 29 exerce une pression, d'une part, sur les lèvres 28 qui sont fixes par rapport au petit tube 5 et, d'autre part, sur une partie en saillie 27 de la goupille 24.

Sur la partie supérieure 17 est soudée une pièce 30. Cette dernière porte un bras 31. Ce bras est donc fixe par rapport à la partie 17 et s'étend dans un plan qui est parallèle aux parties supérieures 17 et 18 des branches du carcan.

Le ressort 29 exerce constamment une pression entre la branche 17, d'une part, et les lèvres 28 et par conséquent le petit arbre 26 et la saillie 23, d'autre part. Il en résulte qu'en position de fermeture suivant les fig. 1 et 4, le ressort 29 cherche à écarter au sommet les parties supérieures 17 et 18 l'une de l'autre, mais ceci est empêché parce que ces parties supérieures 17 et 18 rencontrent alors les séparateurs 14 de l'élément de suspension.

Dans la position suivant la fig. 2 au contraire, et dès que le petit arbre 26 est parvenu sous le plan des goupilles 15 et 16, le ressort 29 écarte au maximum les parties 17 et 18 l'une de l'autre, de telle sorte que le ressort maintient ou amène en position mutuellement écartée les parties supérieures 17 et 18 des branches de carcan.

Le bras 31 porte un petit axe d'articulation 32, par l'intermédiaire d'une pièce de liaison non représentée aux dessins, qui maintient le petit axe quelque peu au-dessus du bras 31. Autour de ce petit axe se situe un levier 33-34. Ce dernier se trouve essentiellement dans un même plan avec le bras 31. Seule une extrémité coudée du bras 34 qui fait partie de ce levier, s'étend jusqu'en dessous du fer cornière 35 qui fait partie d'un verrou.

Au sommet de la partie supérieure 17 est monté un petit axe d'articulation 36. Autour de ce dernier s'articule le verrou précité qui est constitué par le fer cornière 35, un fer plat non représenté aux dessins, et une pièce de liaison 37 entre ces fers. Le fer cornière 35 se situe devant le carcan et le fer plat derrière ce dernier. Par sa direction principale, le verrou s'étend dans le plan qui est défini par les parties supérieures 17 et 18 des branches de carcan. En position de fermeture, qui est celle représentée à la fig. 1, la partie supérieure 18 rencontre la pièce de liaison 37. Le verrou repose alors par son fer cornière 35 sur une saillie 38 qui est partiellement encastrée dans l'extrémité supérieure de la partie supérieure 18 d'une branche de carcan.

La pièce de liaison 37 empêche alors que les parties supérieures 17 et 18 soient amenées de la position de fermeture suivant la fig. 1 à celle d'ouverture suivant la fig. 2. L'extrémité supérieure de la partie supérieure 18 ne peut en effet pas franchir la pièce de liaison 37 aussi longtemps que le verrou 35-37 n'est pas soulevé. Le verrou n'empêche pas le passage de la position d'ouverture suivant la fig. 2 vers celle de fermeture suivant la fig. 1, parce que la partie supérieure 18 d'une branche de carcan possède au sommet un pan incliné 39. Ce dernier soulève la partie de liaison 37 et donc le verrou 35-37 précisément au moment du passage de la position d'ouverture suivant la fig. 2 à celle de fermeture suivant la fig. 1.

Lorsqu'on exerce sur le bras 33 qui forme poignée, une pression vers le bas, le bras 34 du même levier remonte. L'extrémité coudée de ce bras 34 exerce alors une pression sur le fer cornière 35 et soulève par conséquent le verrou 35-37. La pièce de liaison 37 n'empêche plus alors que l'extrémité supérieure de la partie supérieure 18 d'une branche de carcan soit déplacée vers la tige 11. On peut alors déplacer vers le bas l'extrémité du bras 31 qui se situe du côté de la partie 18, de telle sorte que les parties supérieures 17 et 18 du carcan sont écartées et passent donc de la position suivant la fig. 1 vers celle de la fig. 2.

Le petit arbre 26 parvient alors sous le plan défini par les lignes d'axe des goupilles 15 et 16, de telle sorte que le ressort 29 qui a tout d'abord maintenu le carcan fermé, amène alors le carcan à la position d'ouverture illustrée à la fig. 2.

Comme déjà décrit ci-dessus, les parties supérieures 17 et 18 des branches de carcan sont reliées aux parties basses 19 et 20 de ces dernières, par l'intermédiaire d'œillets 21 et 22 qui s'étendent respectivement suivant la direction longitudinale et la direction transversale de la station couché-et-debout.

Les extrémités supérieures de l'étrier inférieur 3 portent des œillets 40 qui sont parallèles au plan transversal de la station couché-et-debout. Ces œillets 40 s'engagent dans des œillets 41 qui se situent à la partie inférieure sur les parties basses 19 et 20 et s'étendent suivant la direction longitudinale de la station couché-et-debout. Etant donné qu'aussi bien les premières articulations constituées par les œillets 21 et 22, qui relient les parties supérieures 17 et 18 aux parties basses 19 et 20, que les secondes articulations constituées par les œillets 40 et 41, qui relient ces parties basses à l'étrier inférieur, sont constituées par des œillets qui s'étendent dans des plans perpendiculaires entre eux, les liaisons articulées permettent des déplacements relatifs des parties reliées dans le plan principal du carcan aussi bien qu'en dehors de ce dernier.

Les parties basses 19 et 20 des branches de carcan s'étendent vers le bas dans la direction de l'autre branche jusqu'au-delà des articulations 40-41 par lesquelles elles sont reliées à l'étrier inférieur 3. Les extrémités inférieures des parties basses 19 et 20 qui s'étendent jusqu'au-delà des articulations 40-41 forment des butoirs 42 en forme de palette qui, en position de fermeture du dispositif, trouvent place dans des évidements 43 pratiqués dans les branches de l'étrier inférieur 3.

Le fonctionnement du dispositif suivant les fig. 1 à 5 a lieu comme suit.

L'animal qui pénètre dans la station couché-et-debout se dirige vers la nourriture dans la mangeoire et rencontre entre cette dernière et lui le carcan ouvert qui s'étend dans la direction transversale de la station couché-et-debout dans la position illustrée à la fig. 2. L'animal qui veut atteindre les aliments, passe la tête dans l'ouverture entre les parties basses 19 et 20 et exerce ainsi une poussée sur les butoirs 42 en forme de palette, ce qui les écarte l'un de l'autre et amène par conséquent les portions des parties basses 19 et 20 qui se trouvent au-dessus des articulations 40-41 à se rapprocher. De ce fait, les parties supérieures 17 et 18 des branches de carcan se rapprochent aussi.

La saillie 23 et la goupille 24 qui étaient dirigées vers le bas en position d'ouverture du carcan, sont dirigées vers le haut à cause des mouvements d'articulation des parties supérieures 17 et 18 autour des goupilles 15 et 16, de telle sorte que le ressort 29 est comprimé jusqu'à ce que la saillie 23 et la goupille 24 aient atteint leur position horizontale. Dès que la saillie 23 et la goupille 24 sont parvenues vers le haut au-delà de la position horizontale, le ressort 29 contribue à écarter les parties supérieures 17 et 18 au-dessus des goupilles 15 et 16, et donc à rapprocher les portions de ces parties supérieures 17 et 18 sous ces goupilles 15 et 16, ce qui amène également le carcan en position de fermeture. De ce fait, les parties basses 19 et 20 sont aussi rapprochées et les butoirs 42 en forme de palette se logent dans les évidements 43 des branches de l'étrier inférieur 3.

Lorsque l'animal pousse aussi le carcan vers la mangeoire, ceci a pour résultat que les parties supérieures 17 et 18 et les parties basses 19 et 20 sont amenées plus près les unes des autres, si les chaînes 6 et 10 sont déjà tendues en position d'ouverture du carcan ou si le jeu pour la chaîne 6 est limité. Ceci contribue au passage décrit ci-dessus de la position d'ouverture à celle de fermeture du carcan, passage qui est réalisé par la pression vers le bas exercée par l'animal sur les butoirs 42.

Lorsque le carcan atteint sa position de fermeture, la pièce de liaison 37 du verrou 35-37 glisse sur le pan incliné 39 de la partie supérieure 18, de telle sorte que finalement cette pièce de liaison 37 vient se placer à côté de la partie supérieure 18 sur le côté dirigé vers la partie supérieure 17, et verrouille le dispositif. La manière dont le dispositif est amené de la position fermée à la position ouverte en agissant sur les bras de levier 31 et 33 a été exposée ci-dessus.

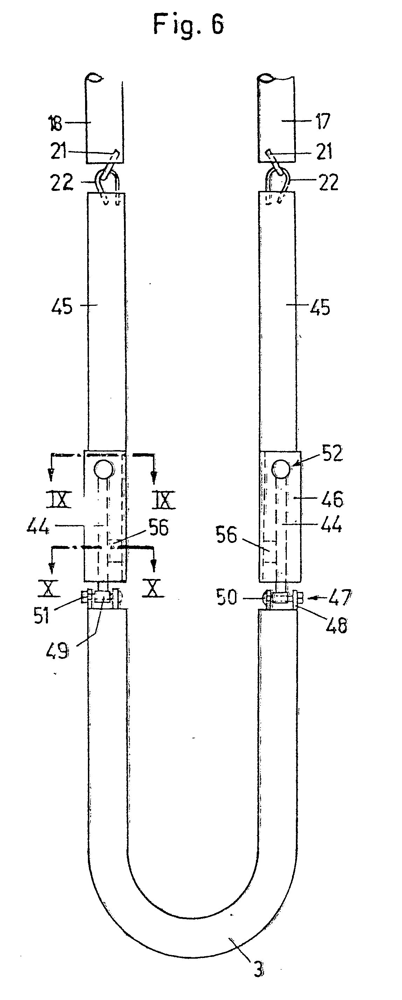

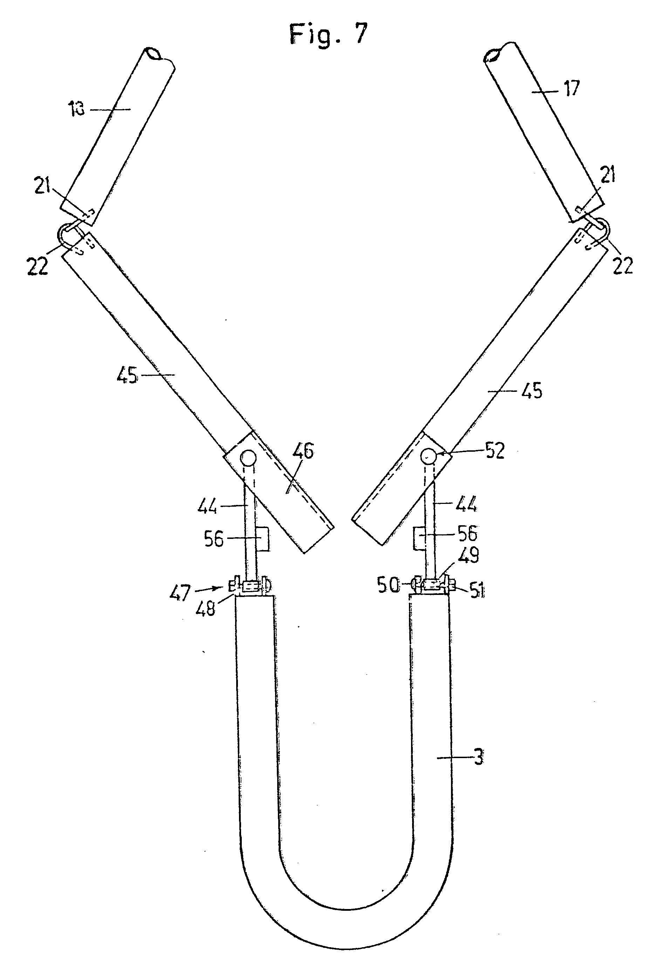

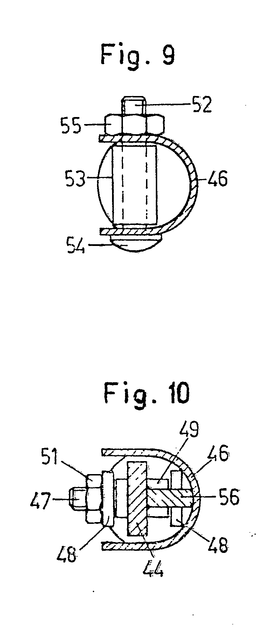

Le dispositif suivant les fig. 6 à 10 diffère de celui décrit ci-avant suivant les fig. 1 à 5 par le fait que l'articulation entre la partie basse, désignée par 45 dans cette forme de réalisation, et l'étrier inférieur 3 est composée et comprend un corps d'articulation central 44 disposé entre la partie basse 45 et l'étrier inférieur 3. Chacune des parties basses 45 qui sont reliées par les premières articulations 21-22 aux parties supérieures 17 et 18, est prolongée par un butoir 46 qui est solidaire de la partie basse. Les corps centraux 44 appartenant aux articulations composées se situent entre les parties basses 45 et l'étrier inférieur.

Chaque corps central 44 est relié de façon articulée, d'une part, à une partie basse 45 et, d'autre part, à une branche de l'étrier inférieur 3 au moyen d'articulations qui ne permettent qu'un mouvement d'articulation simple.

Une seconde articulation qui forme la liaison entre le corps central 44 et l'étrier inférieur 3, présente son axe d'articulation dans le plan principal du carcan. Cette seconde articulation possède en tant que goupille pivot, un boulon 47 qui est supporté dans deux plaquettes 48 qui sont soudées sur l'extrémité supérieure d'une branche de l'étrier inférieur 3. Entre les plaquettes 48 est situé, autour du boulon 47, un tube 49 qui se présente sur l'extrémité inférieure d'un corps central 44. En dehors des plaquettes sont situés la tête 50 du boulon 47 et l'écrou 51 vissé sur l'autre extrémité du boulon.

Chaque partie basse 45 est reliée à une partie supérieure 17, 18 par la première articulation précitée, qui sera décrite plus en détail, et elle est reliée au corps central 44 par une troisième articulation. L'axe de cette dernière est perpendiculaire au plan de carcan principal. Chaque troisième articulation comprend en tant que goupille pivot, un boulon 52 qui est supporté dans un butoir 46 qui est solidaire d'une partie basse 45. Autour du boulon 52 formant goupille pivot est situé un tube 53 qui est soudé sur l'extrémité supérieure d'un corps central 44. Ce tube est situé entre les branches du butoir 46 qui a une forme en U en section transversale. En dehors de ces branches sont situés, d'un côté, la tête 54 du boulon 52 et, de l'autre côté, un écrou 55 qui est vissé sur l'autre extrémité du boulon 52.

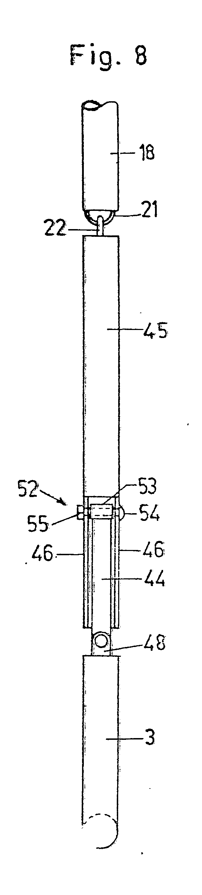

Sur leurs surfaces se faisant face, donc dirigées vers l'intérieur du carcan, les corps centraux 44 portent des butées 56 que rencontrent les butoirs 46 lorsque le carcan prend la position de fermeture des fig. 6 et 8.

Dans cette position de fermeture, les butoirs 46 entourent les corps centraux 44 et les butées 56 qui y sont prévues. L'animal attaché dans le carcan peut bien alors pousser vers l'avant les parties basses 45 et ainsi provoquer un mouvement d'articulation des parties basses 45 conjointement avec les corps centraux 44 autour des goupilles pivots 47, mais pour l'animal attaché un mouvement d'articulation au niveau des goupilles d'articulation 52 est pratiquement exclu, également dans la direction perpendiculaire au plan de carcan principal, même s'il devait y avoir un certain jeu dans les articulations avec les goupilles pivots 52.

L'animal arrivant ferme le carcan en poussant sur les butoirs 46 qui forment en fait des prolongements des parties basses 45. Il n'existe cependant aucun danger que l'animal, lors de l'arrivée ou quand il est attaché, se pince la peau entre les butoirs 46, d'une part, et les corps centraux 44 d'autre part, à cause du fait que dès que le carcan se déplace vers la position de fermeture et a fortiori quand le carcan est parvenu à la position de fermeture, les corps centraux 44 sont entourés par les butoirs 46 à section transversale en forme de U.

En position de fermeture, l'engagement entre les butoirs 46 et les corps centraux 44 et les butées 56 se trouvant sur celles-ci, est aidé par le fait que les articulations entre les parties supérieures 17 et 18 et les parties basses 45 se situent quelque peu vers l'extérieur par rapport aux lignes d'axe des parties supérieures 17 et 18. Parmi les œillets 21 et 22 s'engageant mutuellement qui forment les premières articulations, qui relient les parties supérieures 17, 18 aux parties basses 45, l'œillet 21 qui est fixe par rapport à la partie supérieure 17 ou 18 est bien perpendiculaire au plan de carcan principal, mais il est dirigé obliquement vers l'extérieur quand le carcan se trouve en position de fermeture, ainsi qu'il ressort de la fig. 6 en particulier. De ce fait, les parties basses 45 sont quelque peu repoussées vers l'extérieur. Elles sont donc poussées avec leurs butoirs 46 contre les butées 56 des corps centraux 44, tout au moins quand le carcan se trouve en position de fermeture.

L'invention n'est en aucune façon limitée aux formes de réalisation décrites ci-avant.

En particulier, on peut adopter une autre réalisation pour le mécanisme de verrou et pour les moyens qui dans une position extrême, maintiennent les parties supérieures des branches de carcan en une position de fermeture et dans une autre position extrême, les maintiennent en une position d'ouverture. On peut adopter dans ce but entre autres, le mécanisme de verrou et les moyens qui sont décrits dans la demande de brevet européen publiée sous le N° 0083466 qui est incorporée ici à titre de référence.

## Revendications

1. Dispositif à fermeture et verrouillage automatiques pour attacher un animal, ce dispositif comprenant:

— un élément de suspension (12-13-14) à suspendre au sommet à une structure fixe (1-2),

— un étrier inférieur (3) qui est relié à la structure fixe (1-2),

— deux branches latérales espacées (17-19 et 18-20 ou 17-45 et 18-45) qui se situent entre l'élément de suspension (12-13-14) et l'étrier inférieur (3) et qui forment conjointement avec ce dernier, un seul carcan, lesdites branches étant chacune constituées par:

— une partie supérieure (17-18) qui s'articule sur l'élément de suspension (12-13-14) autour d'un axe (15-16) perpendiculaire au plan principal du carcan et s'étend au-dessus et en dessous de cet axe (15-16), et

— une partie basse (19-20 ou 45) qui est reliée par l'intermédiaire d'une première articulation (21-22) à la partie supérieure (17-18), et par l'intermédiaire d'une autre articulation (40-41 ou 47-44-52) à l'étrier inférieur (3), lesdites articulations (21-22 et 40-41 ou 47-44-52) permettant ensemble un mouvement dans le plan principal du carcan et hors de celui-ci,

— des moyens élastiques à dépassement de point mort (23 à 29) qui, dans une position extrême de fermeture maintiennent rapprochées les parties inférieures des parties supérieures (17-18) et, dans l'autre position extrême d'ouverture maintiennent écartées lesdites parties inférieures avec les extrémités supérieures des parties supérieures rapprochées l'une de l'autre, et

— un verrou (36-37) qui, au sommet, verrouille les branches (17-19 et 18-20 ou 17-45 et 18-45), l'une par rapport à l'autre en position de fermeture, caractérisé en ce que la partie basse (19-20 ou 45) d'au moins une branche comporte un prolongement inférieur (42-46) s'étendant au-delà de ladite autre articulation (40-41 ou 47-44-52) qui forme la liaison avec l'étrier inférieur (3), ledit prolongement étant situé du côté intérieur au carcan par rapport à ladite autre articulation (40-41 ou 47-44-52) de manière à s'étendre en direction de l'autre branche en position d'ouverture du carcan.

2. Dispositif suivant la revendication précédente, caractérisé en ce que le prolongement inférieur (42-46) de la partie basse (19-20 ou 45) qui, en position d'ouverture du carcan, s'étend dans la direction de l'autre branche (20-19 ou 45) est dirigée vers le bas en cette position.

3. Dispositif suivant l'une quelconque des revendications précédentes, caractérisé en ce que le prolongement (42) de la partie basse (19-20) qui s'étend au-delà de l'autre articulation (40-41) est en forme de palette.

4. Dispositif suivant l'une quelconque des revendications précédentes, caractérisé en ce que l'extrémité supérieure de l'étrier inférieur (3) possède un évidement (43) qui reçoit le prolongement (42) de la partie inférieure (19-20) qui s'étend au-delà de l'autre articulation (40-41).

5. Dispositif suivant la revendication 1, caractérisée en ce que ladite autre articulation (47-44-52) est composée et comprend

— un corps central d'articulation (44),

— une seconde articulation (47) formant la liaison entre ce corps (44) et l'étrier inférieur (3) et ayant son axe dans le plan du carcan, et

— une troisième articulation (52) formant la liaison entre ce corps (44) et la partie basse (45) et ayant son axe perpendiculaire au plan du carcan.

6. Dispositif suivant la revendication 5, caractérisé en ce que le prolongement (46) de la partie basse (45) qui s'étend en direction de l'autre branche en position d'ouverture du carcan et le corps central d'articulation (44) s'engagent mutuellement en position de fermeture du carcan.

7. Dispositif suivant la revendication 6, caractérisé en ce que le prolongement (46) de la partie basse (45) qui s'étend en direction de l'autre branche en position d'ouverture du carcan entoure le corps central d'articulation (44) en position de fermeture du carcan.

8. Dispositif suivant la revendication 7, caractérisé en ce que le prolongement (46) de la partie basse (45) qui s'étend vers le bas en position d'ouverture du carcan, possède une section transversale en forme de U, avec la base sur le côté interne du carcan.

9. Dispositif suivant la revendication 8, caractérisé en ce que sur la partie basse (45) et/ou sur le corps central d'articulation (44) est prévue une butée (56) par laquelle cette partie basse (45) et ce corps central d'articulation (44) s'engagent mutuellement en position de fermeture du carcan.

10. Dispositif suivant l'une quelconque des revendications 5 à 9, caractérisé en ce que la première articulation (21-22) se situe vers l'extérieur par rapport à la ligne d'axe de la partie supérieure (17-18) correspondante.

11. Dispositif suivant la revendication 10, caractérisé en ce que la première articulation (21-22), est constituée par deux œillets s'engageant mutuellement (21-22), et l'œillet (21) qui est fixe par rapport à la partie supérieure (17-18) est perpendiculaire au plan principal du carcan et est dirigé obliquement vers l'extérieur.

## Patentansprüche

1. Bindevorrichtung zum Fesseln von Tieren mit automatischer Schliessung und Verriegelung, mit

— einem an einer festen Struktur (1, 2) aufzuhängenden Aufhängemittel (12, 13, 14),

— einem an dieser festen Struktur (1, 2) befestigten unteren Bügel (3),

— zwei voneinander entfernten, zwischen dem vorgenannten Aufhängemittel (12, 13, 14) und dem unteren Bügel (3) angeordneten und zusammen mit diesem Bügel (3) eine einzige Halsschelle bildenden Seitenschenkeln (17, 19 und 18, 20 oder 17, 45 und 18, 45), wobei jeder dieser Schenkel besteht aus

— einem am vorgenannten Aufhängemittel (12, 13, 14) um eine senkrecht zur Hauptebene der Halsschelle stehende Achse (15, 16) angelenkten, sich oberhalb und unterhalb dieser Achse (15, 16) erstreckenden oberen Teil (17, 18), und

— einem mittels eines ersten Gelenkes (21, 22) am oberen Teil (17, 18) und mittels eines anderen Gelenkes (40, 41 oder 47, 44, 52) am unteren Bügel (3) angelenkten unteren Teil (19, 20 oder 45), wobei diese Gelenke (21, 22 und 40, 41 oder 47, 44, 52) zusammen eine Beweglichkeit in der Hauptebene der Halsschelle und ausserhalb derselben zulassen,

— elastischen Mitteln (23-29) mit Totpunktüberschreitung, welche in einer Extremstellung (Schliessstellung) die unteren Enden der oberen Teile (17, 18) zusammenhalten und in der anderen Extremstellung (Öffnungsstellung) die vorgenannten unteren Teile entfernt halten mit zusammenliegenden oberen Enden der oberen Teile, und

— einem Riegel (36-37), der obenan die vorgenannten Schenkel (17, 19 und 18, 20 oder 17, 45 und 18, 45) gegenseitig in ihrer Schliessstellung hält, dadurch gekennzeichnet, dass der untere Teil (19, 20 oder 45) wenigstens eines Schenkels mit einer sich jenseits des vorgenannten anderen, die Verbindung mit dem unteren Bügel (3) bildenden Gelenkes (40, 41 oder 47, 44, 52) erstreckenden unteren Verlängerung (42, 46) versehen ist, welche sich an der Innenseite der Halsschelle in bezug auf das vorgenannte andere Gelenk (40, 41 oder 47, 44, 52) befindet, derart dass sie sich in der Öffnungsstellung der Halsschelle nach dem anderen Schenkel erstreckt.

2. Vorrichtung gemäss dem vorhergehenden Anspruch, dadurch gekennzeichnet, dass die untere Verlängerung (42, 46) des unteren Teiles (19, 20 oder 45), welche sich in der Öffnungsstellung der Halsschelle nach dem anderen Schenkel (20, 19 oder 45) erstreckt, in dieser Stellung nach unten gerichtet ist.

3. Vorrichtung gemäss irgendeinem der vorhergehenden Ansprüche, dadurch gekennzeichnet, dass die sich jenseits des anderen Gelenkes (40, 41) erstreckende Verlängerung (42) des unteren Teiles (19, 20) spatelförmig gestaltet ist.

4. Vorrichtung gemäss irgendeinem der vorhergehenden Ansprüche, dadurch gekennzeichnet, dass das obere Ende des unteren Bügels (3) mit einer Aussparung (43) für die sich jenseits des anderen Gelenkes (40, 41) erstreckende Verlängerung (42) des unteren Teiles (19, 20) versehen ist.

5. Vorrichtung gemäss dem Anspruch 1, dadurch gekennzeichnet, dass das vorgenannte andere Gelenk (47, 44, 52) ein zusammengesetztes, die folgenden Teile aufweisendes Gelenk ist:

— ein Zentralgelenkkörper (44);

— ein zweites, den vorgenannten Körper (44) mit dem unteren Bügel (3) verbindendes Gelenk (47), dessen Achse in der Ebene der Halsschelle liegt, und

— ein drittes, den vorgenannten Körper (44) mit dem unteren Teil (45) verbindendes Gelenk (52), dessen Achse senkrecht zur Ebene der Halsschelle steht.

6. Vorrichtung gemäss dem Anspruch 5, dadurch gekennzeichnet, dass die sich nach dem anderen Schenkel in der Öffnungsstellung der Halsschelle erstreckende Verlängerung (46) des unteren Teiles (45) und der Zentralgelenkkörper (44) sich in der Schliessstellung der Halsschelle miteinander im Eingriff befinden.

7. Vorrichtung gemäss dem Anspruch 6, dadurch gekennzeichnet, dass die sich nach dem anderen Schenkel in der Öffnungsstellung der Halsschelle erstreckende Verlängerung (46) des unteren Teiles (45) den Zentralgelenkkörper (44) in der Schliessstellung der Halsschelle umschliesst.

8. Vorrichtung gemäss dem Anspruch 7, dadurch gekennzeichnet, dass die in der Öffnungsstellung der Halsschelle nach unten gerichtete Verlängerung (46) des unteren Teiles (45) einen U-förmigen Querschnitt aufweist, dessen Basis sich an der Innenseite der Halsschelle befindet.

9. Vorrichtung gemäss dem Anspruch 8, dadurch gekennzeichnet, dass der untere Teil (45) bzw. der Zentralgelenkkörper (44) mit einem Anschlag (56) versehen ist, mittels dessen dieser untere Teil (45) und dieser Zentralgelenkkörper sich in der Schliessstellung der Halsschelle miteinander im Eingriff befinden.

10. Vorrichtung gemäss irgendeinem der Ansprüche 5-9, dadurch gekennzeichnet, dass das erste Gelenk (21, 22) sich auswärts in bezug auf die Achsenlinie des entsprechenden oberen Teiles (17, 18) befindet.

11. Vorrichtung gemäss dem Anspruch 10, dadurch gekennzeichnet, dass das erste Gelenk (21, 22) aus zwei miteinander zusammenwirkenden Ösen (21, 22) besteht und die in bezug auf den oberen Teil (17, 18) feststehenden Öse (21) senkrecht zur Hauptebene der Halsschelle steht und schräg nach aussen gerichtet ist.

## Claims

1. Automatically closing and locking device for tying up an animal, this device comprising:
 — a suspension element (12-13-14) to be hung at the top from a fixed structure (1-2),
 — a bottom yoke (3) which is connected to the fixed structure (1-2),
 — two spaced side legs (17-19 and 18-20, or 17-45 and 18-45) which lie between the suspension element (12-13-14) and the bottom yoke (3) and which form together with this latter one, a single yoke, said legs each being comprised of:
 — a top part (17-18) which hinges on the suspension element (12-13-14) about an axis (15-16) at right angle to the main yoke plane and extends above and below said axis (15-16), and
 — a lower part (19-20 or 45) which is connected through a first hinge (21-22) to the top part (17-18), and through another hinge (40-41 or 47-44-52) to the bottom yoke (3), said hinges (21-22 and 40-41, or 47-44-52) allowing together a motion in the main yoke plane and outside same,
 — resilient means with dead centre overshooting (23 to 29) which in one end closing position, retain close together the lower portions of the top parts (17-18), and in the other end opening position, retain said lower portions spaced away with the top ends from the top parts close together, and
 — a bolt (36-37) which locks at the top the legs (17-19 and 18-20, or 17-45 and 18-45) relative to one another in closing position, characterized in that the lower part (19-20 or 45) from at least one leg comprises a bottom extension (42-46) extending beyond said other hinge (40-41 or 47-44-52) which forms the connection with the bottom yoke (3), said extension being located on the yoke inner side relative to said other hinge (40-41 or 47-44-52) in such a way as to extend in the direction of the other leg in the yoke opening position.

2. Device as defined in claim 1, characterized in that the bottom extension (42-46) of the lower part (19-20 or 45) which extends in the yoke opening position, in the direction of the other leg (20-19 or 45), faces downwards in this position.

3. Device as defined in either one of claims 1 and 2 characterized in that the extension (42) of the lower part (19-20) which extends beyond the other hinge (40-41) is in the shape of a pallet.

4. Device as defined in any one of claims 1-3, characterized in that the top end of the bottom yoke (3) has a recess (43) which receives the extension (42) of the lower part (19-20) which extends beyond the other hinge (40-41).

5. Device as defined in claim 1, characterized in that said other hinge (47-44-52) is composite and comprises
 — a central hinging body (44),
 — a second hinge (47) forming the connection between said body (44) and the bottom yoke (3), and having the axis thereof in the yoke plane and
 — a third hinge (52) forming the connection between said body (44) and the lower part (45), and having the axis thereof at right angle to the yoke plane.

6. Device as defined in claim 5, characterized in that the extension (46) of the lower part (45) which extends in the direction of the other leg in the yoke opening position, and the central hinging body (44) engage one another in the yoke closing position.

7. Device as defined in claim 6, characterized in that the extension (46) of the lower part (45) which extends in the direction of the other leg in the yoke opening position, surrounds the central hinging body (44) in the yoke closing position.

8. Device as defined in claim 7, characterized in that the extension (46) of the lower part (45) which extends downwards in the yoke opening position, has a U-shaped cross-section, with the basis thereof on the yoke inner side.

9. Device as defined in claim 8, characterized in that there is provided on the lower part (45) and/or on the central hinging body (44), a stop (56) wherewith said lower part (45) and said central hinging body (44) engage one another in the yoke closing position.

10. Device as defined in any one of claims 5-9 characterized in that the first hinge (21-22) lies on the outside relative to the centre line of the corresponding top part (17-18).

11. Device as defined in claim 10, characterized in that the first hinge (21-22) is comprised of two mutually-engaging eyes (21-22), and the eye (21) which is fixed relative to the top part (17-18), lies at right angle to the main yoke plane and faces slantingly outwards.

# Fig. 1

## Fig. 2

# Fig. 3

## Fig. 4

## Fig. 5

# Fig. 6

# Fig. 7

# Fig. 8

## Fig. 9

## Fig. 10